# EUROPEAN PATENT APPLICATION

(11) **EP 4 560 474 A1**
(43) Date of publication of application: **28.05.2025**
(21) Application number: 24208086.9
(22) Date of filing: 22.10.2024
(51) Int. Cl.: G06F 9/54

(54) **METHOD FOR CALLING HARDWARE ACROSS DEVICES, ELECTRONIC DEVICE, AND STORAGE MEDIUM**

(30) Priority: 25.10.2023 CN 202311396708
(71) Applicant: Beijing Xiaomi Mobile Software Co., Ltd., Beijing 100085 (CN)
(72) Inventor: ZHANG, Enwei, Beijing (CN); LIU, Qing, Beijing (CN); QIU, Feng, Beijing (CN)
(74) Representative: Dehns Germany Partnerschaft mbB

(57) **Abstract**

A method for calling hardware across devices includes: in response to a trigger operation by a user for a virtual hardware service corresponding to target hardware, acquiring, through a hardware coordination service interface, hardware metadata of the target hardware; sending, through a hardware cross-device call interface, a hardware call instruction to the target hardware based on the hardware metadata; sending, through a data stream transmission interface, a data stream acquisition request for the target hardware to the called device; and receiving data stream information returned by the called device in response to the data stream acquisition request, where the data stream information is generated in response to the target hardware executing the hardware call instruction.

## Description

### TECHNICAL FIELD

The present invention relates to the field of computer technology, specifically involving a method for calling hardware across devices, an electronic device, and a storage medium.

### BACKGROUND

In a multi-device network environment, users usually wish to use hardware resources of other devices within a network on one device. For example, due to a higher camera configuration on a mobile phone compared to that on a tablet, the tablet can call upon the camera on the mobile phone to take pictures by means of interoperability and interconnection, thereby obtaining captured images.

In the related art, during a hardware cross-device call, users usually need to establish remote connections and perform hardware cross-device call operations based on types of devices and systems of the calling and called devices.

### SUMMARY

According to embodiments of the present invention, there is provided a method for calling hardware across devices, an electronic device, and a storage medium.

In a first aspect, the present invention provides a method for calling hardware across devices. The method is performed by a calling device, and includes: acquiring hardware metadata of target hardware through a hardware coordination service interface in response to a trigger operation by a user for a virtual hardware service corresponding to the target hardware, where the target hardware is set in a called device, and the calling device or the called device is one of a terminal, or a server; calling a hardware cross-device call interface, generating a hardware call instruction based on the hardware metadata, sending the hardware call instruction to the target hardware, and enabling the target hardware to execute the hardware call instruction; sending a data stream acquisition request for the target hardware to the called device through a data stream transmission interface; and receiving data stream information returned by the called device in response to the data stream acquisition request, where the data stream information is generated in response to the target hardware executing the hardware call instruction.

In a second aspect, the present invention provides a method for calling hardware across devices. The method is performed by a called device and includes: determining that a hardware call instruction sent by a calling device for target hardware is received, and controlling the target hardware to execute the hardware call instruction, where the calling device or the called device is one of a terminal, or a server; the target hardware is set in the called device; the hardware call instruction is generated by the calling device calling a hardware cross-device call interface based on hardware metadata of the target hardware; and the hardware metadata is acquired by the calling device through a hardware coordination service interface in response to a trigger operation by a user for a virtual hardware service corresponding to the target hardware; determining that a data stream acquisition request sent by the calling device for the target hardware is received, and acquiring data stream information of the target hardware in response to the data stream acquisition request, where the data stream acquisition request is sent by the calling device through a data stream transmission interface; and returning the data stream information to the calling device, where the data stream information is generated in response to the target hardware executing the hardware call instruction.

In a third aspect, present invention provides an electronic device including: a processor; and a memory storing computer instructions for causing the processor to perform the method in the first aspect or the second aspect.

In a fourth aspect, the present invention provides a non-transitory storage medium storing computer instructions that, when executed by a processor, causes the processor to perform the method in the first aspect or the second aspect.

### BRIEF DESCRIPTION OF THE DRAWINGS

A brief introduction of the accompanying drawings is provided below, and the drawings show examples of the embodiments of the present invention.
FIG. 1 is a schematic diagram of architecture of a system for calling hardware across devices in an embodiment of the present invention.
FIG. 2 is a flowchart of a method for calling hardware across devices in an embodiment of the present invention.
FIG. 3 is a schematic diagram of acquiring hardware metadata in an embodiment of the present invention.
FIG. 4 is a schematic diagram of hardware management in an embodiment of the present invention.
FIG. 5 is a schematic diagram of a hardware cross-device call interface in an embodiment of the present invention.
FIG. 6 is a schematic diagram of transmitting data stream in an embodiment of the present invention.
FIG. 7 is a structural diagram of a device for calling hardware across devices in an embodiment of the present invention.
FIG. 8 is a structural diagram of another device for calling hardware across devices in an embodiment of the present invention.
FIG. 9 is a structural schematic diagram of an electronic device in an embodiment of the present invention.

### DETAILED DESCRIPTION

The technical solutions of the present invention will be described clearly and completely in the following in conjunction with the accompanying drawings. It is obvious that the described embodiments are examples of the embodiments of the present invention and not all of the embodiments. In addition, the technical features involved in the different embodiments of the present invention described below may be combined with each other as long as they do not conflict with each other.

Firstly, some terms involved in the embodiments of the present invention will be explained for the understanding of those skilled in the art.

Terminal device. It can be a mobile terminal, fixed terminal, or portable terminal, such as mobile phones, stations, units, devices, multimedia computers, multimedia tablets, Internet nodes, communication devices, desktop computers, laptops, netbooks, tablet computers, personal communication system devices, personal navigation devices, personal digital assistants, audio/video players, digital cameras/camcorders, positioning devices, TV receivers, receivers for radio broadcasting, e-book devices, gaming devices, or any combination thereof, including accessories and peripherals of these devices, or the combination thereof. It will be understood that the terminal devices can support any type of user-specific interfaces (e.g., wearable devices).

Server. It can be an independent physical server, a server cluster composed of multiple physical servers, or a distributed system. It can also a cloud server that provides basic cloud computing services such as cloud services, cloud databases, cloud computing, cloud functions, cloud storage, network services, cloud communications, middleware services, domain name services, security services, and big data and artificial intelligence platforms.

Based on the above-described defects in the related art, a method and device for calling hardware across devices, an electronic device and a storage medium are provided in the embodiments of the present invention, which are intended to simplify the cumbersome operations of the hardware cross-device call.

An embodiment of the present invention provides a method for calling hardware across devices, which can be applied to an electronic device. The specific type of the electronic device is not limited by the present invention and can be any type of device suitable for implementation, such as terminal devices or servers, etc., which will not be repeated in the present invention.

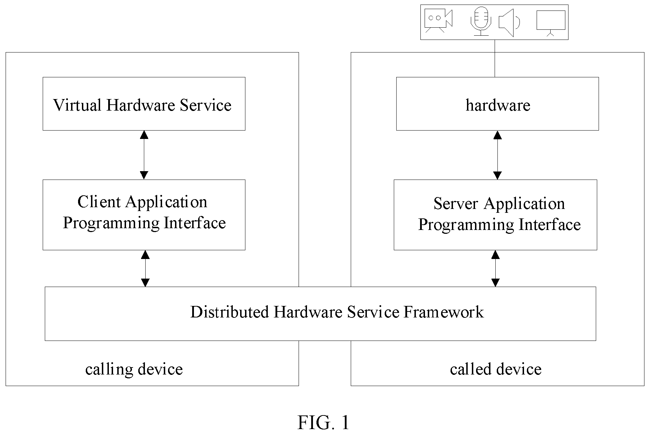

Referring to FIG. 1, it is a schematic diagram of architecture of a system for calling hardware across devices. The system includes a calling device and a called device. Both the calling device and the called device can be any type of electronic device, such as a terminal device and a server, etc.

In one embodiment, interaction between the calling device and the called device is carried out through a distributed hardware service framework. The calling device is provided with virtual hardware services and a client application programming interface (API). The called device includes hardware and a server API.

The distributed hardware service framework includes a distributed hardware coordination service and a data stream transmission service.

The virtual hardware services are programs set up for the hardware of the called device. For example, virtual camera services, virtual audio services, and virtual peripheral services can be set up for camera devices, audio devices, and peripherals, respectively.

The hardware in the embodiments of the present invention refers to computer hardware. It is composed of many modular components with different functions and can perform operations such as input, processing, storage, and output in coordination with software. The computer hardware typically includes several types: output devices (such as displays, printers, and speakers), input devices (such as mice, keyboards, and cameras), central processors, storage devices (such as memory, hard drives, optical discs, USB drives, and storage cards), and motherboards.

The server API is set to correspond to the client API. An API is an interface provided by an operating system for applications to call upon, allowing the applications to call the API to cause the operating system to execute commands (actions) of the applications. In the embodiments of the present invention, the virtual hardware service of the calling device calls the client API to enable the distributed hardware service framework to execute commands such as data stream transmission for the virtual hardware service. The APIs of the calling device can include: a hardware collaboration service interface, a hardware cross-device call interface, and a data stream transmission interface.

In this way, the virtual hardware service of the calling device can call the distributed hardware service framework through the client API to call the target hardware of the called device, achieving the hardware cross-device call.

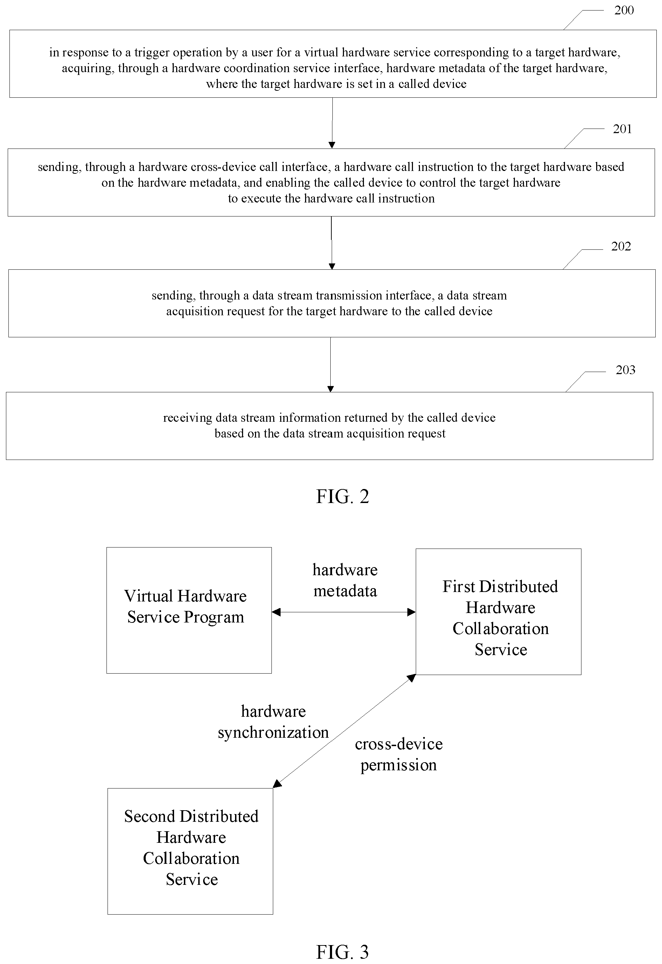

Referring to FIG. 2, it is a flowchart of a method for calling hardware across devices in an embodiment of the present invention. The method is applied to the calling device in the system for calling hardware across devices shown in FIG. 1. The method is described below in conjunction with FIGS. 1 and 2, and may include steps 200, 201, 202, and 203.

Step 200, in response to a trigger operation by a user for a virtual hardware service corresponding to target hardware, acquiring, through a hardware coordination service interface, hardware metadata of the target hardware.

Here, the hardware metadata includes basic attribute information of the hardware, such as hardware identification, hardware functional parameters (e.g., resolution of a camera), and so on.

In one embodiment, when performing step 200, the following steps can be performed by calling the distributed hardware coordination service through the hardware coordination service interface.

In a first step, in response to the trigger operation by the user for the virtual hardware service corresponding to the target hardware, sending, by the calling device, a hardware information acquisition request for the target hardware to the called device.

In a second step, in response to determining that the hardware information acquisition request sent by the calling device for the target hardware is received, acquiring, by the called device, the hardware metadata.

Here, the hardware information acquisition request is sent by the calling device through the hardware coordination service interface.

In a third step, returning, by the called device, the hardware metadata to the calling device.

In a fourth step, receiving, by the calling device, the hardware metadata returned by the called device based on the hardware information acquisition request.

In one embodiment, when performing step 200, the following steps may also be included: calling, by the calling device, the distributed hardware coordination service through the hardware coordination service interface to acquire cross-device permission for the target hardware; and stopping a hardware cross-device call in response to the cross-device permission indicating a prohibition on the call.

Here, the cross-device permission is configured to indicate whether the calling device has permission to use the target hardware in the called device across devices. Optionally, the cross-device permission can be obtained in real-time or stored locally.

For example, the calling device sends a permission request for the target hardware to the called device. The called device displays a permission confirmation interface to the user based on the permission request and returns the cross-device permission set by the user to the calling device based on a permission control operation by the user.

Referring to FIG. 3, it is a schematic diagram of acquiring hardware metadata in an embodiment of the present invention. The first distributed hardware coordination service performs periodic detection. When the first distributed hardware coordination service determines that there is hardware to be synchronized, it obtains the hardware metadata of the hardware to be synchronized through the second distributed hardware coordination service and sends the hardware metadata to the virtual hardware service. Similarly, the first distributed hardware coordination service can also acquire the cross-device permission for the hardware to be synchronized from the calling device through the second distributed hardware coordination service.

Here, the virtual hardware services are programs set up for the hardware of the called device. For example, virtual camera services, virtual audio services, and virtual peripheral services can be set up for camera devices, audio devices, and peripherals, respectively. The virtual hardware services and the first distributed hardware coordination service are provided on the calling device, while the second distributed hardware coordination service is provided on the called device.

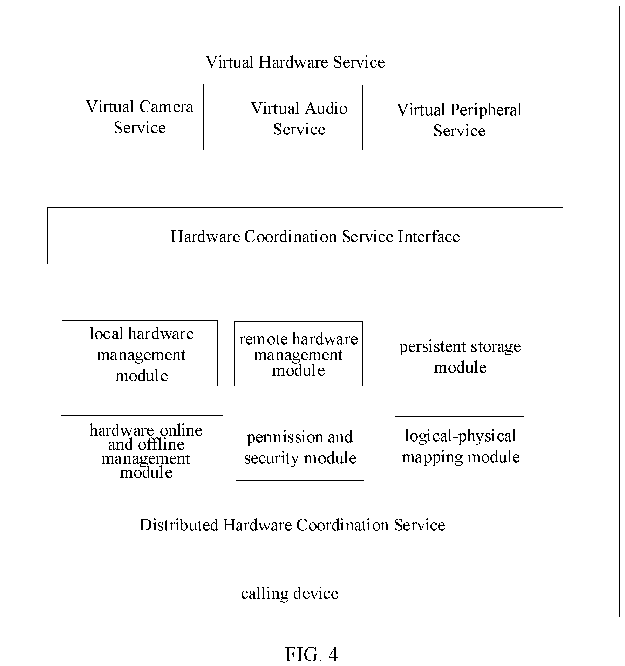

Referring to FIG. 4, it is a schematic diagram of hardware management. FIG. 4 shows virtual hardware services, a hardware coordination service interface, and distributed hardware coordination services. The virtual hardware services include a virtual camera service, a virtual audio service, and a virtual peripheral service.

The distributed hardware coordination services may include the following modules: a local hardware management module, a remote hardware management module, a persistent storage module, a hardware online and offline management module, a permission and security module, and a logical-physical mapping module.

The local hardware management module is used to store and manage the hardware metadata of the calling device. The remote hardware management module is used to store and manage the hardware metadata of associated devices. The persistent storage module is used to store hardware-related information. The hardware online and offline management module is used to store and manage the online and offline status of associated devices. The permission and security module are used to store cross-device permissions for the hardware of associated devices.

According to the embodiments of the present invention, the distributed hardware coordination service manages distributed hardware of various devices in a unified manner using a global hardware resource pool abstract model. It can dynamically acquire hardware metadata from different devices, synchronize hardware metadata across devices, manage cross-device permissions for hardware of different devices, and monitor the online/offline status of associated devices, thereby providing a foundation for subsequent cross-device calls of hardware.

Furthermore, based on the hardware metadata of the target hardware, the calling device establishes a collaborative relationship with the target hardware. This collaborative relationship includes the correspondence between the calling device and the target hardware, as well as the hardware metadata of the target hardware.

The following code provides an example of collaborative relationships:
Future<List<AssociationInfo>> getAssociations(); // Retrieve collaborative relationships
Future<List<HardwareInfo>> getRemoteHardwares(); // Retrieve hardware list
void associate(HardwareInfo hardwareInfo, AssociationListener listener, int m); // Establish a collaborative relationship
void disassociate(HardwareInfo hardwareInfo, AssociationListener listener); // Disassociate a collaborative relationship
Future<Boolean> checkPermission(AssociationInfo info); // Permission check

In one embodiment, the calling device acquires established collaborative relationships and the hardware metadata of hardware of all associated devices within a network. If there is hardware having no established collaborative relationship, a collaborative relationship will be established with the hardware based on the hardware metadata of the hardware.

The associated device and the calling device are different devices within the same network. The associated device and the calling device can be connected to the network via Bluetooth^{®} or wireless (Wi-Fi), etc. The associated device and the calling device can be logged into the same account.

In the embodiments of the present invention, the calling device can acquire established collaborative relationships, access hardware of associated devices within the network, generate new collaborative information, or disassociate established collaborative relationships, and can also acquire cross-device permissions.

Referring to Fig. 2, Step 201, sending, through a hardware cross-device call interface, a hardware call instruction to the target hardware based on the hardware metadata, and enabling the called device to control the target hardware to execute the hardware call instruction.

In one embodiment, when the called device determines that the hardware call instruction sent by the calling device for the target hardware is received, it controls the target hardware to execute the instruction.

The target hardware is set in the called device. The hardware call instruction is sent, through a hardware cross-device call interface, by the calling device based on the hardware metadata of the target hardware in response to the trigger operation by the user for the virtual hardware service corresponding to the target hardware. The hardware metadata is acquired by the calling device through the hardware coordination service interface.

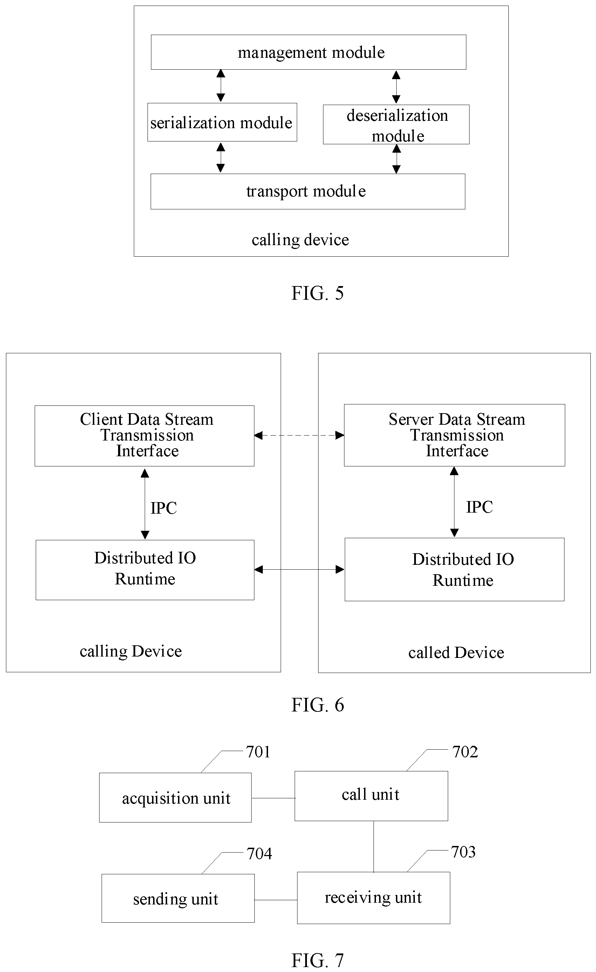

Referring to FIG. 5, it is a schematic diagram of a hardware cross-device call interface. The hardware cross-device call interface includes a management module (RpcManager), a serialization module (RpcInvoker), a deserialization module (RpcExecutor), and a transport module (RpcTransport).

In one embodiment, when performing step 201, the following steps can be adopted in combination with FIG. 5.

In a first step, generating, through the hardware cross-device call interface, the hardware call instruction by the calling device based on the hardware metadata.

In one embodiment, the calling device invokes RpcManager through the hardware cross-device call interface to generate the hardware call instruction based on the hardware metadata.

In a second step, serializing, by the calling device, the hardware call instruction to obtain a serialized hardware call instruction.

In one embodiment, the calling device performs JSON serialization of the hardware call instruction through RpcInvoker.

In a third step, transmitting, by the calling device, the serialized hardware call instruction to the target hardware.

In one embodiment, the calling device uses RpcTransport to send the serialized hardware call instruction to the target hardware through a remote call connection.

The remote call connection can be a network connection based on the Remote Procedure Call (RPC) protocol. It can be configured according to user requirements, which can support lightweight data exchange formats such as JavaScript Object Notation (JSON) RPC 2.0 protocol, synchronous and asynchronous calls, and multiple systems such as Android, Windows, and Vela systems.

In one embodiment, the calling device establishes a remote call connection with the target hardware based on the collaborative relationship with the target hardware.

In a fourth step, controlling, by the called device, the target hardware to execute the hardware call instruction in response to determining that the hardware call instruction is received.

Furthermore, the calling device can also receive, through RpcTransport, call response information returned by the target hardware based on the hardware call instruction, perform, through RpcExecutor, deserialization of the call response information, and return, through RpcManager, the deserialized call response information to the virtual hardware service.

For example, a hardware call instruction can be: {"jsonrpc": "2.0", "method": "subtract", "params": [42, 23], "id": 1}.

Here, "jsonrpc": "2.0" indicates that the RPC protocol version is 2.0, "method": "subtract" indicates that the calling method is a subtraction method, "params": [42, 23] indicates that the parameters are '42' and '23', respectively, and "id": 1 indicates that the sequence number of the hardware call instruction is 1.

For example, call response information can be: {"jsonrpc": "2.0", "result": 19, "id": 1}.

Here, "jsonrpc": "2.0" indicates that the RPC protocol version is 2.0, "result": 19 indicates that the returned result is '19', and "id": 1 indicates that the sequence number of the hardware call instruction is 1.

A segment of RPC code is provided below to illustrate the use of the RPC protocol:
public <T> void bindService(String deviceId, Class<T> serviceInterface, ServiceConnection<T> serviceConnection); // Bind a service
public <T> void unbindService(String deviceId, RpcCore.ServiceComponent<T> component); // Unbind a service
public <T> void startService(T serviceInstance); // Start a service
public <T> void stopService(T serviceInstance); // Stop a service

In one embodiment, by binding a service, the calling device can be bound to the called device. After the binding, by starting the service, the calling device sends a hardware call instruction for starting to the target hardware, and by stopping the service, it sends a call stop instruction for stopping to the target hardware. Further, the calling device can be unbound from the called device by unbinding the service.

In the embodiments of the present invention, through the hardware cross-device call interface, remote calling of the target hardware of the called device can be performed similar to Interprocess Communication (IPC), which simplifies the cumbersome operations of hardware remote calling, and improves the efficiency and reliability of hardware remote calling.

Referring to Fig. 2, Step 202, sending, through a data stream transmission interface, a data stream acquisition request for the target hardware to the called device.

In one embodiment, when performing step 202, the following steps can be adopted.

In a first step, sending, through the data stream transmission interface, a data stream connection request by the calling device to the called device.

In a second step, in response to determining that the data stream connection request sent by the calling device through the data stream transmission interface is received, sending, by the called device, a connection response message to the calling device to establish a data stream connection between the calling device and the called device.

In a third step, sending, through the data stream connection, the data stream acquisition request by the calling device to the called device.

Referring to Fig. 2, Step 203, receiving data stream information returned by the called device based on the data stream acquisition request.

In one embodiment, when performing step 203, the following steps can be adopted.

In a first step, in response to determining that the data stream acquisition request sent by the calling device through the data stream connection is received, acquiring, by the called device, the data stream information.

In a second step, returning, by the called device, the data stream information to the calling device through the data stream connection.

In a third step, receiving, by the calling device, the data stream information sent by the called device.

Referring to FIG. 6, it is a schematic diagram of transmitting data stream. FIG. 6 shows a calling device and a called device. The calling device is provided with a client data stream transmission interface generated based on the Distributed Input Output (IO) Client Software Development Kit (SDK), as well as a Distributed IO Runtime. The called device is provided with a server data stream transmission interface generated by the Distributed IO Server SDK, as well as a Distributed IO Runtime. The Distributed IO Runtime is used for data stream transmission between the calling device and the called device through data stream connections.

The data stream transmission interface and the Distributed IO Runtime can share memory and transfer data through IPC.

A code example of calling the data stream transmission interface using the Distributed IO Client is provided below to explain the data stream transmission interface of the calling device:
public int init(String localIp, String clientName) // Initialize client information of the calling device;
public int start(String remoteIp, int remotePort) // Initialize server information of the called device;
public int stop();
public int attachSurface(Surface surface) // Mount a virtual hardware service;
public int setMediaInfo(MiPlayCastMediaInfo info) // Set a data stream format;
public int registerCallback(MiplayCastClientListener 1) // Register a callback function;
public int unInit() // Uninstall.

In this way, based on the client information on the calling device and the server information on the called device, a data stream connection can be established with the called device for the virtual hardware service corresponding to the target hardware.

A code example of calling the data stream transmission interface using the Distributed IO Server is provided below to explain the data stream transmission interface of the called device:
public int init(String localIp, String serverName); // Initialize server information on the called device;
public int start();
public int stop();
public int write(MediaData mediaData); // Write data stream
public int setMediaInfo(MiPlayCastMediaInfo info); // Set a data stream format
public int unInit(); // Uninstall

In one embodiment, when the called device determines, via communication listening, that a data stream connection request sent by the calling device is received, it can send a connection response message to the calling device to establish a data stream connection between the calling device and the called device.

In an example, if the calling device is device A, the called device is device B, and the target hardware is a camera device, the virtual camera service of device A acquires hardware metadata of the camera device through a hardware coordination service interface and, based on the hardware metadata, sends a hardware call instruction for shooting to the camera device through a hardware cross-device call interface, in order to control the camera device to perform a shooting operation, as well as receives a video stream sent by the camera device through a data stream transmission interface.

In another example, if the calling device is device A, the called device is device B, and the target hardware is a telephone device, the virtual telephone service of device A, through a hardware coordination service interface, acquires hardware metadata of the telephone device and, based on the hardware metadata, sends a hardware call instruction for making a call to the telephone device through a hardware cross-device call interface, in order to control the telephone device to perform a call operation, as well as receives an audio stream sent by the telephone device through a data stream transmission interface.

Furthermore, when the calling device determines that a service stop request is received, it can also send a call stop instruction to the target hardware through the hardware cross-device call interface.

According to the embodiments of the present invention, in response to a trigger operation by a user for a virtual hardware service of the calling device corresponding to target hardware of the called device, the calling device acquires hardware metadata of the target hardware of the called device through a hardware coordination service interface and, based on the hardware metadata, the calling device sends a control command (i.e., a hardware call instruction) to the target hardware through a hardware cross-device call interface to control the target hardware to perform the corresponding operations. Additionally, the calling device acquires data streams (i.e., data stream information) of the target hardware through a data stream transmission interface. This approach is based on the concept of Device as a Service (DAAS), which abstracts, services, and pools device hardware, allowing users to directly call the target hardware of any called device through virtual hardware services without needing to consider the differences between devices or systems. This simplifies the complex operations of the hardware cross-device call and enables direct access to hardware capabilities through the hardware cross-device calls at the system's Hardware Abstract Layer (HAL) or service layer between different devices or systems. Cross-device hardware service calls can be realized in systems such as Android, Windows, and Linux, expanding the scope of hardware cross-device calls, improving the stability and performance of hardware cross-device calls, and providing a high user experience.

In an aspect, an embodiment of the present invention provides a method for calling hardware across devices including: acquiring, by a calling device, hardware metadata of target hardware through a hardware coordination service interface in response to a trigger operation by a user for a virtual hardware service corresponding to the target hardware, where the target hardware is set in a called device, and the calling device or the called device is one of: a terminal, or a server; calling, by the calling device, a hardware cross-device call interface, generating a hardware call instruction based on the hardware metadata, sending the hardware call instruction to the target hardware, and enabling the target hardware to execute the hardware call instruction; sending, by the calling device, a data stream acquisition request for the target hardware to the called device through a data stream transmission interface; and receiving, by the calling device, data stream information returned by the called device in response to the data stream acquisition request, where the data stream information is generated in response to the target hardware executing the hardware call instruction.

In one embodiment, the calling device and the called device interact through a distributed hardware service framework including a distributed hardware coordination service and a data stream transmission service; the calling device is provided with the virtual hardware service and a client application programming interface (API), and the called device is provided with a server API corresponding to the client API, the client API including at least: the hardware coordination service interface, the hardware cross-device call interface, and the data stream transmission interface; and the virtual hardware service of the calling device is configured to call the client API to enable the distributed hardware service framework to execute commands for the virtual hardware service.

In one embodiment, the virtual hardware service is a program set up for the target hardware of the called device and includes at least one of: a virtual camera service, a virtual audio service, or a virtual peripheral service.

In one embodiment, the hardware metadata includes basic attribute information of the target hardware, the basic attribute information including at least one of a hardware identification, or a hardware functional parameter.

In one embodiment, the method further includes: calling, through the hardware coordination service interface, a distributed hardware coordination service to perform following acts: sending a hardware information acquisition request for the target hardware to the called device; and receiving the hardware metadata returned by the called device based on the hardware information acquisition request.

In one embodiment, the method further includes: calling, through the hardware coordination service interface, the distributed hardware coordination service to acquire cross-device permission for the target hardware before sending the hardware call instruction to the target hardware; and stopping a hardware cross-device call in response to the cross-device permission indicating a prohibition on the call.

In one embodiment, the method further includes: serializing the hardware call instruction to obtain a serialized hardware call instruction; and transmitting the serialized hardware call instruction to the target hardware.

In one embodiment, the method further includes: transmitting, through a remote call connection, the serialized hardware call instruction to the target hardware, where the remote call connection is based on a Remote Procedure Call (RPC) protocol configured to support one of: Android system, Windows system, or Vela system.

In one embodiment, the method further includes: establishing a collaborative relationship with the target hardware based on the hardware metadata of the target hardware, where the collaborative relationship includes a correspondence between the calling device and the target hardware; and establishing the remote call connection with the target hardware based on the collaborative relationship with the target hardware.

In one embodiment, sending, through the data stream transmission interface, the data stream acquisition request for the target hardware to the called device includes: sending, through the data stream transmission interface, a data stream connection request to the called device; in response to a receipt of a connection response message returned by the called device based on the data stream connection request, determining that a data stream connection between the calling device and the called device is successfully established; and sending, through the data stream connection, the data stream acquisition request to the called device.

In an aspect, an embodiment of the present invention provides a method for calling hardware across devices including: determining, by a called device, that a hardware call instruction sent by a calling device for target hardware is received, and controlling the target hardware to execute the hardware call instruction, where the calling device or the called device is one of a terminal, or a server; the target hardware is set in the called device; the hardware call instruction is generated by the calling device calling a hardware cross-device call interface based on hardware metadata of the target hardware; and the hardware metadata is acquired by the calling device through a hardware coordination service interface in response to a trigger operation by a user for a virtual hardware service corresponding to the target hardware; determining, by the called device, that a data stream acquisition request sent by the calling device for the target hardware is received, and acquiring data stream information of the target hardware in response to the data stream acquisition request, where the data stream acquisition request is sent by the calling device through a data stream transmission interface; and returning, by the called device, the data stream information to the calling device, where the data stream information is generated in response to the target hardware executing the hardware call instruction.

In one embodiment, the method further includes: determining that a hardware information acquisition request sent by the calling device for the target hardware is received, and acquiring the hardware metadata, where the hardware information acquisition request is sent by the calling device through the hardware coordination service interface; and returning the hardware metadata to the calling device.

In one embodiment, the method further includes: determining that a permission request sent by the calling device for the target hardware is received, and acquiring cross-device permission for the target hardware, where the permission request is sent by the calling device through the hardware coordination service interface; and returning the cross-device permission to the calling device.

In one embodiment, the method further includes: determining that a data stream connection request sent by the calling device through the data transmission interface is received, and sending a connection response message to the calling device to establish a data stream connection between the calling device and the called device; and determining that the data stream acquisition request sent by the calling device through the data stream connection is received, and acquiring the data stream information.

Based on the same inventive concept, the embodiments of the present invention also provide a device for calling hardware across devices. Since the principle of the above device and equipment for solving a problem is similar to that of a method for calling hardware across devices, the implementation of the above device can be referred to the implementation of the method, and the repetitions will not be repeated. The device may be applied to an electronic device, and the present invention does not limit the type of electronic device, which may be any type of device suitable for implementation, such as a terminal device and a server, etc., which will not be repeated herein.

Referring to FIG. 7, it is a structural diagram of a device for calling hardware across devices in an embodiment of the present invention. In some embodiments, the device for calling hardware across devices in the examples of the present invention includes: an acquisition unit 701 configured to, acquire hardware metadata of target hardware through a hardware coordination service interface in response to a trigger operation by a user for a virtual hardware service corresponding to the target hardware, where the target hardware is set in a called device, and the calling device or the called device is one of: a terminal, or a server; a call unit 702 configured to call a hardware cross-device call interface, generate a hardware call instruction based on the hardware metadata, send the hardware call instruction to the target hardware, and enable the target hardware to execute the hardware call instruction; a sending unit 703 configured to send, through a data stream transmission interface, a data stream acquisition request for the target hardware to the called device; and a receiving unit 704 configured to receive data stream information returned by the called device in response to the data stream acquisition request, where the data stream information is generated in response to the target hardware executing the hardware call instruction.

In one embodiment, the calling device and the called device interact through a distributed hardware service framework including a distributed hardware coordination service and a data stream transmission service; the calling device is provided with the virtual hardware service and a client application programming interface (API), and the called device is provided with a server API corresponding to the client API, the client API including at least: the hardware coordination service interface, the hardware cross-device call interface, and the data stream transmission interface; and the virtual hardware service of the calling device is configured to call the client API to enable the distributed hardware service framework to execute commands for the virtual hardware service.

In one embodiment, the virtual hardware service is a program set up for the target hardware of the called device and includes at least one of: a virtual camera service, a virtual audio service, or a virtual peripheral service.

In one embodiment, the hardware metadata includes basic attribute information of the target hardware, the basic attribute information including at least one of: a hardware identification, or a hardware functional parameter.

In one embodiment, the acquisition unit 701 is configured to: call, through the hardware coordination service interface, a distributed hardware coordination service to perform following acts: sending a hardware information acquisition request for the target hardware to the called device; and receiving the hardware metadata returned by the called device based on the hardware information acquisition request.

In one embodiment, the call unit 702 is further configured to: call, through the hardware coordination service interface, the distributed hardware coordination service to acquire cross-device permission for the target hardware; and stop the hardware cross-device call in response to the cross-device permission indicating a prohibition on the call.

In one embodiment, the call unit 702 is configured to: serialize the hardware call instruction to obtain a serialized hardware call instruction; and transmit the serialized hardware call instruction to the target hardware.

In one embodiment, the call unit 702 is configured to: transmit, through a remote call connection, the serialized hardware call instruction to the target hardware, where the remote call connection is based on a Remote Procedure Call (RPC) protocol configured to support one of: Android system, Windows system, or Vela system.

In one embodiment, the call unit 702 is configured to: establish a collaborative relationship with the target hardware based on the hardware metadata of the target hardware, where the collaborative relationship includes a correspondence between the calling device and the target hardware; and establish the remote call connection with the target hardware based on the collaborative relationship with the target hardware.

In one embodiment, the sending unit 703 is configured to: send, through the data stream transmission interface, a data stream connection request to the called device; determine that a data stream connection between the calling device and the called device is successfully established in response to a receipt of a connection response message returned by the called device based on the data stream connection request; and send, through the data stream connection, the data stream acquisition request to the called device.

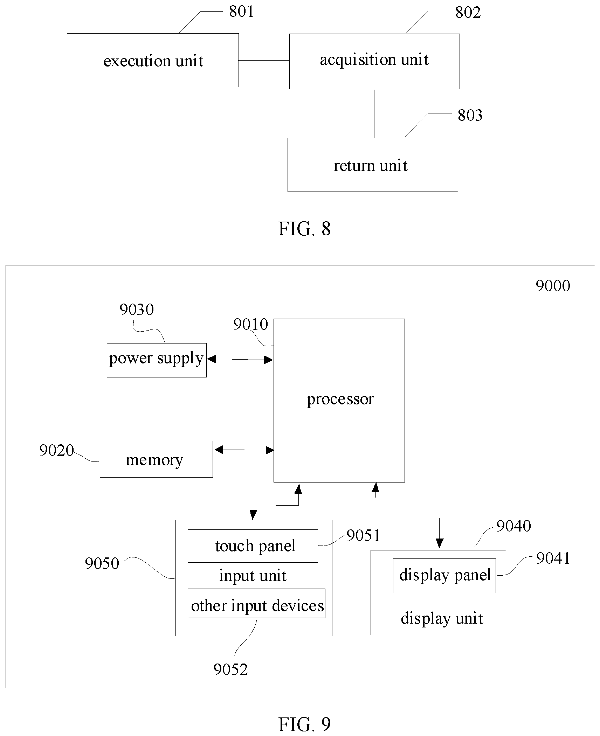

Referring to FIG. 8, it is a structural diagram of another device for calling hardware across devices in an embodiment of the present invention. In some embodiments, the device for calling hardware across devices in the examples of the present invention includes: an execution unit 801 configured to determine that a hardware call instruction sent by a calling device for target hardware is received, and control the target hardware to execute the hardware call instruction, where the calling device or the called device is one of: a terminal, or a server; the target hardware is set in the called device; the hardware call instruction is generated by the calling device calling a hardware cross-device call interface based on hardware metadata of the target hardware; and the hardware metadata is acquired by the calling device through a hardware coordination service interface in response to a trigger operation by a user for a virtual hardware service corresponding to the target hardware; an acquisition unit 802 configured to determine that a data stream acquisition request sent by the calling device for the target hardware is received, and acquire data stream information of the target hardware in response to the data stream acquisition request, where the data stream acquisition request is sent by the calling device through a data stream transmission interface; and a return unit 803 configured to return the data stream information to the calling device, where the data stream information is generated in response to the target hardware executing the hardware call instruction.

In one embodiment, the execution unit 801 is further configured to: determine that a hardware information acquisition request sent by the calling device for the target hardware is received, and acquire the hardware metadata, where the hardware information acquisition request is sent by the calling device through the hardware coordination service interface; and return the hardware metadata to the calling device.

In one embodiment, the execution unit 801 is further configured to: determine that a permission request sent by the calling device for the target hardware is received, and acquire cross-device permission for the target hardware, where the permission request is sent by the calling device through the hardware coordination service interface; and return the cross-device permission to the calling device.

In one embodiment, the acquisition unit 802 is further configured to: determine that a data stream connection request sent by the calling device through the data transmission interface is received, and send a connection response message to the calling device to establish a data stream connection between the calling device and the called device; and the acquisition unit 802 is configured to: determine that the data stream acquisition request sent by the calling device through the data stream connection is received, and acquire the data stream information.

The method for calling hardware across devices in the embodiments of the present invention includes: in response to a trigger operation by a user for a virtual hardware service corresponding to target hardware, acquiring, through a hardware coordination service interface, hardware metadata of the target hardware, where the target hardware is set in a called device; sending, through a hardware cross-device call interface, a hardware call instruction to the target hardware based on the hardware metadata, and enabling the called device to control the target hardware to execute the hardware call instruction; sending, through a data stream transmission interface, a data stream acquisition request for the target hardware to the called device; and receiving data stream information returned by the called device based on the data stream acquisition request. In this way, the target hardware of the called device is abstracted as a virtual hardware service for the calling device, and thus, users do not need to consider the differences from devices and systems where the target hardware is located, enabling direct cross-device call of the target hardware through the virtual hardware service and simplifying the complex operations of the hardware cross-device call.

In the embodiments of the present invention, an electronic device is provided, including: a processor; and a memory storing computer instructions for causing the processor to execute the methods of any of the above embodiments.

In the embodiments of the present invention, a storage medium is provided, storing computer instructions for enabling a computer to execute the methods of any of the above embodiments. FIG. 9 illustrates a structural diagram of an electronic device 9000. Referring to FIG. 9, the electronic device 9000 includes: a processor 9010 and memory 9020. Optionally, it may also include a power supply 9030, a display unit 9040, and an input unit 9050.

The processor 9010 acts as the control center of the electronic device 9000, connecting various components through interfaces and circuits. By running or executing software programs and/or data stored in the memory 9020, the processor 9010 performs various functions of the electronic device 9000, enabling comprehensive monitoring of the electronic device 9000.

In the embodiments of the present invention, the processor 9010 executes the various steps of the above embodiments by calling the computer programs stored in the memory 9020.

Optionally, the processor 9010 may include one or more processing units. Preferably, the processor 9010 may integrate an application processor and a modem processor, where the application processor mainly handles the operating system, user interface, and applications, while the modem processor mainly handles wireless communication. It will be understood that the modem processor can also be separate from the processor 9010. In some embodiments, the processor, memory, and other components may be implemented on a single chip, while in other embodiments, they may be implemented on separate chips.

The memory 9020 can mainly include a program storage region and a data storage region. The program storage region can store the operating system, various applications, etc., while the data storage region can store data created during the use of the electronic device 9000. Additionally, the memory 9020 may include high-speed random access memory and non-volatile memory, such as at least one disk storage device, flash memory device, or other non-volatile solid-state storage device.

The electronic device 9000 also includes a power supply 9030 (such as a battery) that supplies power to various components. The power supply can be logically connected to the processor 9010 through a power supply management system, enabling functions such as charging, discharging, and power consumption managements through the power supply management system.

The display unit 9040 is used to display information entered by the user or provided to the user, as well as various menus of the electronic device 9000. In the embodiments of the present invention, it is mainly used to display the display interface of various applications in the electronic device 9000 and objects such as text and images displayed on the interface. The display unit 9040 may include a display panel 9041, which can be configured in forms such as Liquid Crystal Display (LCD) or Organic Light-Emitting Diode (OLED).

The input unit 9050 is used to receive information input by the user, such as numbers or characters. The input unit 9050 may include a touch panel 9051 and other input devices 9052. The touch panel 9051, also referred to as a touch screen, collects touch operations by a user on or near it, e.g., operations by a user using a finger, stylus, or any other suitable object or accessory on or near the touch panel 9051.

Specifically, the touch panel 9051 can detect a touch operation of the user and detect signals brought about by the touch operation, convert these signals into contact coordinates, send them to the processor 9010, and receive commands from the processor 9010 and execute them. In addition, the touch panel 9051 may be implemented using various types of resistive, capacitive, infrared, and surface acoustic wave, etc. Other input devices 9052 may include, but are not limited to, one or more of a physical keyboard, function keys (e.g., volume control keys, on/off keys, etc.), trackballs, mice, joysticks, and the like.

The touch panel 9051 may cover the display panel 9041. When the touch panel 9051 detects touch operations on or near it, provides them to the processor 9010 to determine the type of touch event, and then the processor 9010 provides corresponding visual output on the display panel 9041 based on the touch event type. Although in FIG. 9, the touch panel 9051 and the display panel 9041 are shown as separate components for the input and output functions of the electronic device 9000, in some embodiments, the touch panel 9051 and the display panel 9041 can be integrated to perform the input and output functions of the electronic device 9000.

The electronic device 9000 may also include one or more sensors, such as pressure sensors, gravity acceleration sensors, proximity light sensors, etc. Depending on specific application needs, the electronic device 9000 may include other components such as cameras, although these components are not the focus of the embodiments of the present invention and are not shown in FIG. 9 and are not further elaborated.

A person skilled in the art can understand that FIG. 9 is only an example of an electronic device and does not limit the electronic device, which may include more or fewer components than shown, or combine certain components, or use different components.

For convenience of description, the above parts are divided into modules (or units) according to their functions for separate descriptions. The functions of the modules (or units) can be implemented in the same or multiple software or hardware.

It is obvious that the above embodiments are merely examples for the purpose of clear illustration and are not intended to be a limitation of the embodiments. For those of ordinary skill in the art, other variations or changes in different forms may be made that fall within the scope of the invention as defined by the claims.

## Claims

1. A method for calling hardware across devices, performed by a calling device, and comprising:
acquiring (200) hardware metadata of target hardware through a hardware coordination service interface in response to a trigger operation by a user for a virtual hardware service corresponding to the target hardware, wherein the target hardware is set in a called device, and the calling device or the called device is one of: a terminal, or a server;
calling a hardware cross-device call interface, generating a hardware call instruction based on the hardware metadata, sending (201) the hardware call instruction to the target hardware, and enabling the target hardware to execute the hardware call instruction;
sending (202) a data stream acquisition request for the target hardware to the called device through a data stream transmission interface; and
receiving (203) data stream information returned by the called device in response to the data stream acquisition request, wherein the data stream information is generated in response to the target hardware executing the hardware call instruction.

2. The method according to claim 1, wherein the calling device and the called device interact through a distributed hardware service framework comprising a distributed hardware coordination service and a data stream transmission service;
the calling device is provided with the virtual hardware service and a client application programming interface, API, and the called device is provided with a server API corresponding to the client API, the client API comprising: the hardware coordination service interface, the hardware cross-device call interface, and the data stream transmission interface; and
the virtual hardware service of the calling device is configured to call the client API to enable the distributed hardware service framework to execute commands for the virtual hardware service.

3. The method according to claim 1 or 2, wherein the virtual hardware service is a program set up for the target hardware of the called device and comprises at least one of: a virtual camera service, a virtual audio service, or a virtual peripheral service.

4. The method according to any preceding claim, wherein the hardware metadata comprises basic attribute information of the target hardware, the basic attribute information comprising at least one of: a hardware identification, or a hardware functional parameter.

5. The method according to any preceding claim, further comprising:
calling, through the hardware coordination service interface, a distributed hardware coordination service to perform:
sending a hardware information acquisition request for the target hardware to the called device; and
receiving the hardware metadata returned by the called device based on the hardware information acquisition request.

6. The method according to claim 5, further comprising:
calling, through the hardware coordination service interface, the distributed hardware coordination service to acquire cross-device permission for the target hardware before sending the hardware call instruction to the target hardware; and
stopping a hardware cross-device call in response to the cross-device permission indicating a prohibition on the call.

7. The method according to any preceding claim, further comprising:
serializing the hardware call instruction to obtain a serialized hardware call instruction; and
transmitting the serialized hardware call instruction to the target hardware.

8. The method according to claim 7, further comprising:
transmitting, through a remote call connection, the serialized hardware call instruction to the target hardware, wherein the remote call connection is based on a Remote Procedure Call, RPC, protocol configured to support one of: Android system, Windows system, or Vela system.

9. The method according to any preceding claim, wherein sending, through the data stream transmission interface, the data stream acquisition request for the target hardware to the called device comprises:
sending, through the data stream transmission interface, a data stream connection request to the called device;
in response to a receipt of a connection response message returned by the called device based on the data stream connection request, determining that a data stream connection between the calling device and the called device is successfully established; and
sending, through the data stream connection, the data stream acquisition request to the called device.

10. A method for calling hardware across devices, performed by a called device, and comprising:
determining that a hardware call instruction sent by a calling device for target hardware is received, and controlling the target hardware to execute the hardware call instruction, wherein the calling device or the called device is one of: a terminal, or a server; the target hardware is set in the called device; the hardware call instruction is generated by the calling device calling a hardware cross-device call interface based on hardware metadata of the target hardware; and the hardware metadata is acquired by the calling device through a hardware coordination service interface in response to a trigger operation by a user for a virtual hardware service corresponding to the target hardware;
determining that a data stream acquisition request sent by the calling device for the target hardware is received, and acquiring data stream information of the target hardware in response to the data stream acquisition request, wherein the data stream acquisition request is sent by the calling device through a data stream transmission interface; and
returning the data stream information to the calling device, wherein the data stream information is generated in response to the target hardware executing the hardware call instruction.

11. The method according to claim 10, further comprising:
determining that a hardware information acquisition request sent by the calling device for the target hardware is received, and acquiring the hardware metadata, wherein the hardware information acquisition request is sent by the calling device through the hardware coordination service interface; and
returning the hardware metadata to the calling device.

12. The method according to claim 10 or 11, further comprising:
determining that a permission request sent by the calling device for the target hardware is received, and acquiring cross-device permission for the target hardware, wherein the permission request is sent by the calling device through the hardware coordination service interface; and
returning the cross-device permission to the calling device.

13. The method according to claim 10, 11 or 12, further comprising:
determining that a data stream connection request sent by the calling device through the data transmission interface is received, and sending a connection response message to the calling device to establish a data stream connection between the calling device and the called device; and
determining that the data stream acquisition request sent by the calling device through the data stream connection is received, and acquiring the data stream information.

14. An electronic device comprising:
a processor (9010); and
a memory (9020) storing computer instructions for causing the processor to perform the method according to any one of claims 1 to 13.

15. A non-transitory storage medium storing computer instructions that, when executed by a processor, cause the processor to perform the method according to any one of claims 1 to 13.
